# EUROPÄISCHE PATENTSCHRIFT

(11) **EP 4 047 766 B1**
(45) Veröffentlichungstag und Bekanntmachung des Hinweises auf die Patenterteilung: **30.07.2025**
(21) Anmeldenummer: 21158377.8
(22) Anmeldetag: 22.02.2021
(51) Int. Cl.: H02G 3/22

(54) **GEBÄUDEINSTALLATIONSANORDNUNG**
BUILDING INSTALLATION ARRANGEMENT
AGENCEMENT D'INSTALLATION DU BÂTIMENT

(43) Veröffentlichungstag der Anmeldung: 24.08.2022
(60) Teilanmeldung: 25182047.8
(73) Patentinhaber: Hauff-Technik GmbH & Co. KG, 89568 Hermaringen (DE)
(72) Erfinder: SCHEURING, Horst, 89542 Herbrechtingen (DE); KURZ, Ralf, 89537 Giengen (DE)
(74) Vertreter: Szynka Smorodin Patentanwälte Partnerschaft mbB

(56) Entgegenhaltungen:
- EP-A1- 3 107 166
- EP-A1- 3 604 709
- EP-A1- 3 660 990
- DE-A1- 10 156 796
- DE-A1- 102005 041 176
- US-A1- 2010 183 058
- REX CAULDWELL: "Supplying power to an outbuilding", 1 February 2004 (2004-02-01), pages 1 - 1, XP093186191, Retrieved from the Internet <URL:https://www.jlconline.com/how-to/supplying-power-to-an-outbuilding_o>

## Beschreibung

Die vorliegende Erfindung betrifft eine Gebäudeinstallationsanordnung.

Wie nachstehend im Einzelnen diskutiert, kann es sich bei dem Gebäude insbesondere um ein Ein- oder Mehrfamilienhaus handeln. Ein solches Gebäude ist an verschiedene Medien angeschlossen, also stets an die Strom- und Wasserversorgung, in der Regel ist auch eine Datenanbindung gegeben. Ein jeweiliges Medium gelangt dabei über einen sogenannten Medienhausanschluss ins Gebäude, diesem nachgelagert passiert das entsprechende Medium dann bspw. einen Zähler und wird dann im Gebäude verteilt (z. B. Strom/Wasser) oder direkt dem Verbraucher zugeführt, etwa Gas der Zentralheizung. Entsprechende Durchführungen, die als Hauseinführung genutzt und dazu bspw. in die Bodenplatte einbetoniert werden, sind aus der EP 3 604 709 A1, der DE 10 2005 041 176 A1 und der EP 3 107 166 A1 bekannt.

Aus der EP 3 660 990 A1 ist ein Gehäuse bekannt, das im Zuge einer Datenkabel- bzw. Glasfasererschließung einem jeweiligen Gebäude zugeordnet in den Boden eingebaut und als Zugangs- bzw. Durchschleifpunkt bei der eigentlichen Datenkabelverlegung genutzt werden kann.

Aus der DE 10 156 796 A1 ist eine elektrische Anschlussdose bekannt, die für eine Unterputz- oder auch Aufputzmontage genutzt werden kann.

Die US 2010/0183058 A1 betrifft ein Datennetzwerk, bei welchem über ein bestehendes Abwasser-Rohrsystem Datenkabel verlegt und dabei über eine Funkkopplung miteinander verbunden werden.

Aus dem Journal of Light Construction ist ein Artikel "Supplying power to an outbuilding" von Rex Cauldwell bekannt, der sich mit dem elektrischen Anschluss eines Nebengebäudes an ein Hauptgebäude beschäftigt.

Der vorliegenden Erfindung liegt das technische Problem zugrunde, eine vorteilhafte Gebäudeinstallationsanordnung anzugeben.

Dies wird erfindungsgemäß mit der Anordnung gemäß Anspruch 1 gelöst. Diese umfasst eine Durchführung mit einem Vergusskörper, der in ein Wand- oder Bodenelement des Gebäudes eingebaut ist, und einem (ersten) Mantelrohr, das sich von dem Vergusskörper weg nach außerhalb des Gebäudes erstreckt. Das Mantelrohr verläuft dabei zumindest abschnittsweise oder bevorzugt über seine gesamte Länge im Boden, also bspw. im Garten des Gebäudes im Erdreich. Dieses Mantelrohr wird zur Verlegung einer (ersten) Medienleitung genutzt, die sich in dem Mantelrohr und damit vom Vergusskörper bzw. Gebäude weg erstreckt. Eine Besonderheit liegt dabei vorliegend in der Nutzung der Durchführung bzw. Medienleitung, durch letztere gelangt das Medium nämlich nicht in das Gebäude, sondern aus diesem heraus. Dementsprechend ist am gebäudeaußenseitigen Ende der Medienleitung kein Versorger, sondern ein Verbraucheranschluss angeordnet bzw. ein Verbraucher angeschlossen.

Bevorzugte Ausgestaltungen sind Gegenstand der gesamten Offenbarung und finden sich insbesondere in den abhängigen Ansprüchen, wobei in der Darstellung der Merkmale nicht immer im Einzelnen zwischen den unterschiedlichen Anspruchskategorien unterschieden wird; jedenfalls implizit ist die Offenbarung hinsichtlich sämtlicher Anspruchskategorien zu lesen. Wird bspw. eine Installationsanordnung mit bestimmten Merkmalen beschrieben, ist dies zugleich als Offenbarung eines Verfahrens zum Herstellen einer Anordnung mit diesen Merkmalen zu verstehen, und umgekehrt; ferner ist die Darstellung einer bestimmten Installationsanordnung auch als Offenbarung der Verwendung einer Durchführung und/oder eines Anschlussgehäuses in einer solchen Installationsanordnung zu verstehen.

Die Gebäudeinstallationsanordnung kann vorteilhaft dahingehend genutzt werden, dass das entsprechende Medium, nämlich gemäß Anspruch 1 Strom und/oder Wasser, außerhalb des Gebäudes verfügbar ist. Dort kann dann ein Strom- oder Wasseranschluss zur Verfügung stehen. Konkret kann damit also bspw. im Garten ein elektrischer Rasenmäher bzw. dessen Ladegerät oder auch allgemein eine Ladestation, z. B. für ein Elektrofahrzeug ("Wall Box"), oder z. B. eine Beleuchtungseinheit, etwa eine Leuchte, betrieben werden. Zusätzlich zu Strom und/oder Wasser kann auch eine Daten-/WLAN-Versorgung im Außenbereich geschaffen werden. Als Verbraucher kann bspw. auch eine Wärmepumpe, etwa eine Luft-, insbesondere Luft-Wasser-Wärmepumpe, angeschlossen werden (z. B. zum Heizen oder i.A. auch Kühlen des Gebäudes), wobei das Mantelrohr für deren elektrische Anbindung und/oder zur Verlegung ihrer Fluidleitung bzw. -leitungen in das Gebäude genutzt werden kann. Die bauliche Integration des Vergusskörpers in das Wand- oder Bodenelement kann dabei zunächst schon aus Platzgründen von Vorteil sein, insbesondere kann dies auch vergleichsweise einfach eine Blindvorverlegung ermöglichen, also zunächst nur die Option zur späteren "Erschließung" des Außenbereichs bzw. Gartens geschaffen werden.

In bevorzugter Ausgestaltung ist der Vergusskörper in das Wand- oder Bodenelement eingegossen, was vorzugsweise im Zuge von dessen Herstellung erfolgt. Bevorzugt ist das Wand- oder Bodenelement aus Beton gegossen, wobei der erstarrte Beton den Vergusskörper umschließt und hält. Das Eingießen des Vergusskörpers, also die bauliche Integration der Durchführung im Zuge der Herstellung des Wand- oder Bodenelements, kann hinsichtlich des Arbeitsaufwands überschaubar sein (z. B. keine Bohr- oder Stemmarbeiten, wie im Falle eines nachträglichen Einbaus). Die Gebäudeinstallationsanordnung kann damit auf relativ einfache Weise bei der Gebäudeherstellung veranlagt werden, was wiederum im Sinne einer Blindvorverlegung von Vorteil sein kann, die später einen erheblichen Mehrwert bieten kann.

Dabei steht mit der Durchführung aus Vergusskörper und Mantelrohr ein mechanisch verlässliches System zur Verfügung, und es lassen sich selbst vergleichsweise große Mantelrohrdurchmesser relativ einfach realisieren bzw. integrieren. Generell kann das Mantelrohr bspw. einen Außendurchmesser von mindestens 4 cm, 5 cm, 6 cm oder 7 cm haben, was bei einer nachträglichen Verlegung mit Bohrarbeiten bereits einen erheblichen Aufwand bedeuten würde. Mögliche Obergrenzen des Mantelrohrdurchmessers können bspw. bei höchstens 20 cm, 15 cm bzw. 12 cm liegen.

Bei dem bevorzugt aus Beton vorgesehenen Wand- oder Bodenelement kann es sich um eine aus Beton gegossene Kelleraußenwand des Gebäudes oder um dessen Bodenplatte aus Beton handeln. Letztere bildet das Fundament des Gebäudes, darauf ist bei einem unterkellerten Gebäude das Kellergeschoss und bei einem nicht unterkellerten Gebäude das Erdgeschoss errichtet. Generell umschließt das "Gebäude" einen Raum, im Allgemeinen kann es sich bspw. auch um ein Nebengebäude handeln, etwa eine Garage; von dem Nebengebäude aus kann ebenfalls der Außen-, insbesondere Gartenbereich erschlossen werden. Bevorzugt ist das Gebäude jedoch ein Wohngebäude was bspw. wegen der prinzipiellen Verfügbarkeit unterschiedlicher Medien von Vorteil sein kann.

Generell ist die erste (oder auch eine weitere) Medienleitung in der fertigen Gebäudeinstallationsanordnung an ihrem dem Verbraucher bzw. Verbraucheranschluss entgegengesetzten, gebäudeseitigen Ende erfindungsgemäß innerhalb des Gebäudes mit dem verbraucherseitigen Ende des entsprechenden Medienhausanschlusses verbunden, jedenfalls mittelbar. Dies kann bspw. über einen Verteiler- und/oder Sicherungskasten erfolgen, etwa im Falle einer Strom- oder auch Datenleitung. Ein jeweiliger Medienhausanschluss umfasst in der Regel auch eine jeweilige Gebäudeeinführung, über die das entsprechende Medium (z. B. Strom, Wasser, Daten etc.) ins Gebäude gelangt, etwa über eine entsprechende Versorgungsleitung vom Versorger. Vorliegend ist das gebäudeinnenseitige Ende des Medienhausanschlusses von Interesse, an dieses ist die erste (oder eine weitere) Medienleitung angebunden (ggf. über einen Verteiler etc. dazwischen). Von dort weg erstreckt sich die Medienleitung dann durch den Vergusskörper und das Mantelrohr (ggf. zuvor noch durch ein weiteres Mantelrohr in den Vergusskörper, s. u.) zum gebäudeaußenseitigen Verbraucher/Verbraucheranschluss; dabei kann sie als durchgehende Leitung durch den Vergusskörper nur hindurchgeschleift sein, dort können aber auch zwei Leitungsabschnitte zusammengesteckt / miteinander verbunden sein.

Sofern vorliegend von einer "Anordnung innerhalb des Gebäudes" die Rede ist, meint dies das Gebäude inklusive Boden und Wänden; infolge der Anordnung "innerhalb des Gebäudes" soll eine vertikale (zur Erdoberfläche senkrechte) Projektion des entsprechenden Teils bzw. Elements (z. B. des gebäudeseitigen Anschlusses der Medienleitung) zumindest anteilig oder bevorzugt vollständig innerhalb der Gebäudegrundfläche liegen. Generell kann die Anordnung innerhalb des Gebäudes, z. B. von Anschlussstellen etc., wegen der vergleichsweise guten Zugänglichkeit und auch aus Schutzgründen von Vorteil sein.

Erfindungsgemäß weist die Durchführung zusätzlich zum ersten ein zweites Mantelrohr auf, das ebenfalls in den Vergusskörper mündet. In diesen können somit mindestens zwei Mantelrohre münden, weiter und besonders bevorzugt mindestens drei bzw. vier Mantelrohre; mögliche Obergrenzen können bspw. bei höchstens acht, sechs bzw. fünf Mantelrohren liegen, besonders bevorzugt sind genau vier Mantelrohre. Unabhängig von der Anzahl Mantelrohre im Einzelnen sind diese bevorzugt untereinander baugleich. Auch wenn in der Beschreibung auf "das Mantelrohr" Bezug genommen wird, ist dies immer auch dahingehend zu lesen, dass auch andere oder bevorzugt sämtliche Mantelrohre der Durchführung entsprechend ausgestaltet sind.

Der Vergusskörper hat bevorzugt eine Boden- und eine Seitenwand, die miteinander einen Hohlraum begrenzen; dieser ist bevorzugt zu der der Bodenwand entgegengesetzten Seite hin offen, von dieser Seite kann bspw. ein Einsatz eingesetzt sein bzw. werden, etwa ein Blinddeckel oder ein Systemeinsatz zum Hindurchführen der Medienleitung(en). Die Boden- und Seitenwand sind bevorzugt monolithisch miteinander, also aus demselben durchgehenden Material geformt. Das bzw. die Mantelrohr(e) mündet bzw. münden bevorzugt über die Bodenwand in den Hohlraum. Im Allgemeinen kann ein Mantelrohr auch monolithisch an den Vergusskörper angeformt sein, bevorzugt ist es jedoch als gesondertes Teil angesetzt, vorzugsweise in eine an der Bodenwand ausgebildete Aufnahme. In dieser kann das Mantelrohr axial formschlüssig gehalten sein, also bspw. mit seinem Endabschnitt verrasten ("axial" bezieht sich insofern auf die Längsachse des Mantelrohres).

Ein eben erwähnter Einsatz (Blinddeckel oder Systemeinsatz) kann bevorzugt gegen den Vergusskörper gedichtet sein bzw. werden, bspw. mit einem umlaufenden Elastomerelement. Der Einsatz kann z. B. so in einen Sitz am Vergusskörper gedrückt werden, bspw. durch Verschrauben oder Verrasten, dass das Elastomerelement dichtend angedrückt wird. Aufgrund des Anschlusses des/der im Boden verlegten Mantelrohre kann ein Abdichten bspw. mit Blick auf Radon-Gas von Vorteil sein. Der Einsatz kann bspw. auch dahingehend mehrteilig ausgebildet sein, dass ein Elastomerelement zwischen einem ersten und einem zweiten Einsatzteil durch Relativverspannen der Einsatzteile (z. B. mittels Schrauben) gestaucht und infolgedessen dichtend an den Vergusskörper angepresst wird. Unabhängig von diesen Details kann eine dem Vergusskörper abgewandte Vorderseite (Oberseite) dann bspw. auch zumindest bereichsweise verkleidet werden, z. B. mit einem Bodenbelag.

Der Vergusskörper ist in dem Wand- oder Bodenelement bevorzugt derart orientiert, dass die Bodenwand dem Gebäudeinneren abgewandt liegt, also bspw. der vom Vergusskörper begrenzte Hohlraum zum Gebäudeinneren hin offen ist. Im Falle der Bodenplatte liegt die Bodenwand dann unten, wohingegen sie im Falle der Kelleraußenwand zur Seite hin weist. Je nach Wand- bzw. Bodendicke kann dann bspw. nur der Vergusskörper oder kann gegebenenfalls auch ein Abschnitt des/der Mantelrohre(s) eingegossen sein, also von dem Beton umschlossen werden. Unabhängig vom Einbau des Vergusskörpers erstreckt sich (das oder) ein jeweiliges Mantelrohr dann zumindest von diesem weg im Boden, wobei ein gebäudeaußenseitiges Ende davon auch oberirdisch münden kann (was aber nicht zwingend ist). "Im Boden" kann bspw. mindestens 10 cm, 20 cm oder 30 cm unterhalb der Oberkante des Bodenaufbaus meinen, mögliche Obergrenzen können bspw. bei höchstens 2 m, 1,5 m bzw. 1 m liegen.

Die unterschiedlichen Mantelrohre können bspw. für unterschiedliche Medien genutzt werden, also bspw. ein Mantelrohr für eine Stromleitung und ein anderes Mantelrohr für eine Datenleitung und/oder ein anderes Mantelrohr für eine Wasserleitung. Einerseits kann die Durchführung damit für ganz unterschiedliche Erschließungen des Außenbereichs genutzt werden, wobei andererseits die Gewerketrennung Sicherheit schaffen kann. Bevorzugt ist dann an jeder der unterschiedlichen Medienleitungen gebäudeaußenseitig ein Verbraucher oder Verbraucheranschluss angeordnet, etwa im Falle der Wasserleitung ein Wasserhahn oder eine anderweitige Verbrauchsstelle, wie z. B. eine Gartendusche etc. Im Falle der Datenleitung kann z. B. eine Funkeinheit angeschlossen sein, etwa zur WLAN-Versorgung im Außenbereich. Mit der Mehrzahl Mantelrohre kommen auch die eingangs diskutierten Vorteile der Blindvorverlegung im Besonderen zu tragen, bestehen also später mehrere/unterschiedliche Ausbaumöglichkeiten.

In bevorzugter Ausgestaltung erstreckt sich ein jeweiliges Mantelrohr mindestens 2 m weit von dem Gebäude weg, hat also sein gebäudeaußenseitiges Ende einen Mindestabstand von 2 m. Betrachtet wird hierbei eine Aufsicht, wobei der Abstand als kleinster Abstand zwischen der Gebäudegrundfläche und dem gebäudeaußenseitigen Rohrende genommen wird. Eine weitere Untergrenze kann bei mindestens 3 m liegen, vorteilhafte Obergrenzen können (davon unabhängig) bspw. höchstens 20 m, 15 m bzw. 10 m betragen. Betrachtet man das dem Gebäude zugehörige Grundstück, erstreckt sich generell ein jeweiliges Mantelrohr bevorzugt ausschließlich innerhalb davon (auch unabhängig von einem Mindestabstand); das gebäudeaußenseitige Ende des jeweiligen Mantelrohres liegt auf dem Grundstück (in Aufsicht betrachtet); in anderen Worten verläuft das jeweilige Mantelrohr nicht über die Grundstücksgrenze hinaus, was besonders bevorzugt für sämtliche Mantelrohre der Durchführung gilt. Vorteilhaft kann bspw. ein noch auf, dabei aber relativ nah an der Grundstücksgrenze mündendes Mantelrohr sein (etwa in einem Abstand von nicht mehr als 2 m, 1,5 m oder 1 m von der Grundstücksgrenze liegendes Mantelrohrende), weil damit hinsichtlich der möglichen Erschließung ein entsprechend großer Bereich zugänglich ist bzw. "aufgespannt" wird.

Erfindungsgemäß erstrecken sich die Mantelrohre der Durchführung in unterschiedlichen Richtungen von dem Gebäude weg, verlaufen sie also in einer Aufsicht betrachtet zumindest abschnittsweise gewinkelt zueinander (also nicht parallel). Betrachtet man in der Aufsicht, also bezogen auf die Erdoberfläche vertikal darauf blickend, je Mantelrohr eine Verbindungsgerade zwischen seinem gebäudeaußenseitigen Ende und seinem durchführungsseitigen Ende, so sind diese Verbindungsgeraden dann bspw. zueinander verkippt. Letzteres meint bspw., dass zwei Verbindungsgeraden miteinander einen Schnittwinkel größer 10°, 20° oder 30° einschließen (wobei als Schnittwinkel der kleinere von zwei miteinander eingeschlossenen Winkeln betrachtet wird). Wie auch das Ausführungsbeispiel illustriert, können sich zwei Mantelrohre auch in einander entgegengesetzte Richtungen erstrecken, können also die Schnittwinkel bis 180° reichen. Generell liegen die "unterschiedlichen Richtungen" jeweils horizontal, weswegen bspw. der Schnittwinkel um eine vertikale Achse genommen wird; im Ergebnis lässt sich damit eine horizontale "Aufspreizung" erreichen, kann also bspw. das Grundstück hinsichtlich einer Vorverlegung relativ großflächig abgedeckt werden.

Wie eingangs erläutert, kann der Gegenstand auch im Falle eines Wandelements Vorteile bieten, besonders bevorzugt wird der Vergusskörper jedoch in die Bodenplatte eingebaut, insbesondere in die Bodenplatte eines kellerlosen Gebäudes. Das Eingießen des Vergusskörpers kann hierbei von besonderem Vorteil sein, weil ein nachträgliches Verlegen eines Mantelrohres bzw. Mantelrohrsystems im Boden aufgrund der kellerlosen Bauweise einen erheblichen Mehraufwand bedeuten würde. Selbst im Falle eines Kellers bedeutet das nachträgliche Bohren, und insbesondere auch Abdichten etc., schon einigen Aufwand. Beim kellerlosen Gebäude müsste zudem von einem Raum im Erdgeschoss schräg nach außen gebohrt werden, was den Aufwand weiter erhöht, zumal eine solche Installation dann auch einen gewissen Raumbedarf hat, was im Erdgeschoss nachteilig sein kann.

Zum Einbau in die Bodenplatte kann der Vergusskörper vor deren Herstellung durch Gießen positioniert werden, bspw. von einer Aufstellvorrichtung getragen.

Bei dieser kann es sich um einen Erdspieß bzw. auch einen Ständer oder ein Gestell handeln. Ferner sind bzw. werden vor dem Gießen bereits das/die Mantelrohr(e) am Vergusskörper angeordnet; von dort können Sie bspw. in einem jeweiligen Graben bis über die Gebäudegrundfläche hinaus verlegt werden, sodass die Mantelrohre bzw. Mantelrohrabschnitte (siehe unten) nach dem Gießen der Bodenplatte seitlich hervorstehen. Danach kann das bzw. können die Mantelrohre dann jeweils noch weiter verlegt, kann also das gebäudeaußenseitige Ende jeweils an die gewünschte Stelle gebracht werden. Wird danach der Bodenaufbau hergestellt, ergibt sich der gewünschte Bodeneinbau ohne maßgeblichen Mehraufwand, wie auch schon beim Eingießen der Durchführung. Mit der Vorabpositionierung des Vergusskörpers und der Mantelrohre wird die bauliche Integration ohne deutlichen Mehraufwand erreicht, weil das darauffolgende Gießen der Bodenplatte ohnehin notwendig ist. Die Integration von Durchdringungen, wie z. B. einem Abwasserrohr etc., ist dem Betonbauer bekannt, weswegen der vorliegende Einbau keine weitergehenden Probleme aufwirft.

Generell kann ein jeweiliges Mantelrohr über seine axiale Erstreckung einteilig oder auch mehrteilig vorgesehen sein. Im Zuge des Einbaus, bspw. beim Eingießen in die Bodenplatte, kann z. B. zunächst nur ein erster Mantelrohrabschnitt am Vergusskörper angeordnet sein, der vor dem Gießen in einem Bereich außerhalb der Gebäudegrundfläche verlegt wird (vgl. den vorstehenden Absatz). Vor der Herstellung des Bodenaufbaus kann der erste dann durch Ansetzen eines zweiten Mantelrohrabschnitts verlängert werden, bspw. mit einer Elastomermuffe als Kupplungsstück. Der zweite Mantelrohrabschnitt wird dann auf dem Grundstück in gewünschter Weise verlegt, danach kann der Bodenaufbau hergestellt werden. Der mehrteilige Aufbau kann bspw. dahingehend von Vorteil sein, dass nach dem Einbau der Durchführung bzw. dem Eingießen des Vergusskörpers zunächst keine allzu großen Überlängen vorliegen, was Stolperstellen etc. vermeiden helfen kann. Prinzipiell kann das Mantelrohr auch mehr als zwei Mantelrohrabschnitte aufweisen, bevorzugt bildet dann jedoch der zweite Mantelrohrabschnitt das gebäudeaußenseitige Ende des Mantelrohres.

Auch unabhängig vom Aufbau der Mantelrohre im Einzelnen können das erste und das zweite Mantelrohr im Falle des kellerlosen Gebäudes bevorzugt an unterschiedlichen Seiten des Gebäudes unter der Bodenplatte hervor bzw. aus dieser heraustreten. In anderen Worten können die demselben Vergusskörper zugeordneten Mantelrohre in Aufsicht betrachtet an unterschiedlichen Außenwänden des Gebäudes im Boden in das Grundstück hineinverlaufen, etwa an gewinkelt, insbesondere senkrecht, oder einander entgegengesetzt liegenden Außenwänden. Es wird auf die vorstehenden Anmerkungen zur Abdeckung bzw. horizontalen Aufspreizung verwiesen.

Gemäß einer bevorzugten Ausführungsform, die ebenfalls eine in die Bodenplatte eingebaute Durchführung betrifft, weist diese ein weiteres Mantelrohr auf, welches sich zumindest abschnittsweise innerhalb eines auf der Bodenplatte errichteten Wandelements erstreckt. Bevorzugt mündet dieses weitere Mantelrohr wie das/die bisher diskutierte(n) Mantelrohr(e) über die Bodenwand des Hohlkörpers in diesen, sodass diese Verlegevariante z. B. ohne weitergehende Modifikation des Vergusskörpers realisiert werden kann. Vom Vergusskörper weg erstreckt sich das weitere Mantelrohr dann also zunächst wie das/die andere(n) Mantelrohr(e) nach unten und dann horizontal, bevor es nach oben in das Wandelement hineinverläuft. Bevorzugt wird dieses Mantelrohr in der Bodenplatte verlegt und steht es nach dem Gießen der Bodenplatte aus dieser hervor, und zwar bevorzugt an jener Stelle, wo das Wandelement errichtet werden soll. Das weitere Mantelrohr kann damit von der Austrittstelle in der Bodenplatte weg innerhalb des Wandelements verlaufen, sodass es keine hervorstehenden Stolper- bzw. schädigungsträchtigen Stellen gibt.

In der fertigen Gebäudeinstallationsanordnung kann durch das weitere Mantelrohr die Medienleitung in den Vergusskörper verlaufen, also ihr Abschnitt zwischen Vergusskörper und Medienhausanschluss. Das weitere Mantelrohr kann dazu bspw. innerhalb des Wandelements bis zu bzw. in die Nähe von einem Anschluss- oder Verteilerkasten verlaufen. Von dort bzw. dem Medianhausanschluss weg kann sich die Medienleitung dann also durch das weitere Mantelrohr in den Vergusskörper hinein und von dort über das erste oder zweite (oder ggf. dritte) Mantelrohr weiter bis zum gebäudeaußenseitigen Verbraucher bzw. Verbraucheranschluss erstrecken.

Auch unabhängig von der abschnittsweisen Verlegung in einem Wandelement kann die Nutzung des weiteren Mantelrohres, das die Bodenplatte durchsetzt, als "Zuführkanal" von Vorteil sein, weil dies bspw. Freiheiten bei der Positionierung des Vergusskörpers eröffnet. Dieser muss, in Aufsicht betrachtet, nicht zwingend nahe einem Wandelement in der Bodenplatte platziert werden, sondern kann bspw. auch "mittig" im Raum, also in gewissem Abstand zu den Wänden angeordnet werden. Damit lässt sich seine Position bspw. hinsichtlich der Mantelrohrverlegung, also späteren Grundstückserschließung optimieren. Es kann also ganz allgemein bevorzugt sein, dass sich ein weiteres Mantelrohr durch die Bodenplatte hindurch nach oben erstreckt, das entgegengesetzte durchführungsseitige Ende aber von unten in den Vergusskörper mündet.

Generell ist in bevorzugter Ausgestaltung die oder zumindest eine der Medienleitungen ein Stromkabel, ist also gebäudeaußenseitig ein Stromverbraucher angeschlossen bzw. steht ein Stromanschluss zur Verfügung. Das Stromkabel kann bspw. für Netzspannung ausgelegt sein, ebenso kann es sich aber um ein Starkstromkabel handeln, etwa 400 V bei 16 A oder auch 32 A. Im Falle des Starkstromkabels kann als Verbraucher bspw. eine Ladestation für Elektroautos angeschlossen werden, ferner lässt sich damit bspw. auch ein elektrischer Saunaofen einer Gartensauna oder ein Whirlpool etc. anschließen bzw. betreiben. Im Allgemeinen kann es sich bei dem Stromkabel aber auch um ein Niedervoltkabel handeln, etwa wenn eine entsprechende Niedervolt-Beleuchtungseinheit betrieben wird. Wie eingangs erwähnt, können mit dem vorliegenden Gegenstand auch vergleichsweise große Mantelrohrdurchmesser ohne übermäßigen Aufwand realisiert werden, weswegen in dem bzw. den Mantelrohr(en) auch ein relativ großer Querschnitt zur Verfügung steht. Dies kann das Verlegen eines Starkstromkabels vereinfachen, zudem kann je Mantelrohr bspw. auch mehr als eine Leitung verlegt werden also bspw. mehrere Stromkabel.

Gemäß einer bevorzugten Ausführungsform ist an das bzw. zumindest eines der Mantelrohre gebäudeaußenseitig ein in den Boden eingebautes Anschlussgehäuse angeschlossen. Es ist also am gebäudeaußenseitigen Ende des Mantelrohres das Anschlussgehäuse angeordnet, und mit seinem entgegengesetzten gebäudeinnenseitigen Ende ist das Mantelrohr bspw. an den Vergusskörper angesetzt, insbesondere in diesen eingeschoben (vgl. oben). Das Anschlussgehäuse ist zumindest über einen Teil seiner vertikalen Erstreckung in den Boden eingebaut. Das Anschlussgehäuse weist eine Seitenwand auf, mit der es einen Gehäuseinnenraum horizontal begrenzt, bevorzugt hat es zusätzlich eine den Gehäuseinnenraum vertikal nach unten begrenzende Bodenwand. Nach vertikal oben kann es insbesondere offen ausgeführt sein, wobei bevorzugt ein reversibel herausnehm- und einsetzbarer Deckel die Öffnung verschließt.

Alternativ kann das Anschlussgehäuse auch eine den Gehäuseinnenraum nach vertikal oben begrenzende Deckelwand aufweisen, die monolithisch mit der Seitenwand geformt ist und im Bedarfsfall ausgetrennt wird. Zur Vereinfachung des Austrennens kann bspw. eine Sollbruchstelle vorgesehen sein, sodass die Deckelwand bspw. mit einem Schlagwerkzeug ausgeschlagen werden kann. Egal ob Deckelwand oder reversibel herausnehmbarer Deckel kann das Anschlussgehäuse bspw. derart in den Boden eingebaut sein, dass seine Oberkante gegenüber der Oberkante des Bodenaufbaus um bspw. nicht mehr als 20 cm, 15 cm, 10 cm oder 5 cm übersteht. Die Oberkanten können insbesondere auch bündig liegen, oder es kann die Oberkante des Anschlussgehäuses auch ein Stück nach unten versetzt sein, bspw. um bis zu 2 cm, 6 cm oder 10 cm unterhalb der Oberkante des Bodenaufbaus liegen. Eine Deckschicht des Bodenaufbaus kann das Anschlussgehäuse also bedecken (Blindvorverlegung), oder das Anschlussgehäuse kann im Wesentlichen bündig mit dieser Deckschicht abschließen.

Das Mantelrohr ist an das Anschlussgehäuse angeschlossen, z. B. an- oder eingesteckt; es kann formschlüssig, z. B. über einen Verrastmechanismus, und/oder kraftschlüssig (z. B. über ein Spannband bzw. einer Spannschelle) daran gehalten sein. Unabhängig von der Befestigung im Einzelnen kann das Mantelrohr in den Gehäuseinnenraum münden, wobei im Falle der Vorverlegung das Ende des Mantelrohres auch verschlossen sein kann, bspw. mit einem Stopfen. Unabhängig von diesen Details kann das Anschlussgehäuse insofern von Vorteil sein, als es einen definierten Zugangspunkt schafft, über den das Mantelrohr für das Verlegen der Medienleitung gut zugänglich ist.

Gemäß einer bevorzugten Ausführungsform trägt das in den Boden eingebaute Anschlussgehäuse dann als Sockel den Verbraucher oder Verbraucheranschluss. Dies kann bspw. dahingehend von Vorteil sein, dass das Anschlussgehäuse zunächst als Zugangspunkt dienen und auch nach dem eigentlichen Anschluss weiter genutzt werden kann, nämlich im Sinne eines Fundaments bzw. mechanischen Trägers. Das Anschlussgehäuse kann auch zum Verwahren einer Überlänge der Medienleitung genutzt werden, bspw. vor oder auch nach der Herstellung des Medienanschlusses und/oder dem Anschließen des Verbrauchers. Insgesamt kann dies bspw. die Installationsarbeiten vereinfachen und können sich auch in der fertigen Installation (hergestellter Medienanschluss bzw. angeschlossener Verbraucher) gute Gebrauchseigenschaften ergeben, bspw. weil die über den Gehäuseinnenraum geführte Medienleitung gut geschützt ist, etwa vor einer Beschädigung (z. B. durch einen Rasenmäher etc.).

Die Installation bzw. Herstellung einer entsprechenden Anordnung kann bspw. in eine Vor- und eine Endmontage unterteilt werden, bevorzugt ist das Anschlussgehäuse zwischen Vor- und Endmontage nach vertikal oben verschlossen, wird also der Gehäuseinnenraum nach oben von einer angeformten Deckelwand oder einem einsetz-/herausnehmbaren Deckel begrenzt (siehe vorne). Im Zuge der Vormontage kann bspw. das Anschlussgehäuse in den Boden eingebaut und kann das am Anschlussgehäuse angeordnete (im Allgemeinen bspw. auch angeformte, bevorzugt angesetzte) Mantelrohr im Boden verlegt werden. Dabei kann das Anschlussgehäuse bereits verschlossen sein, es kann aber auch erst danach verschlossen werden.

Bei der Endmontage wird das Anschlussgehäuse nach oben geöffnet, also der Deckel herausgenommen bzw. die Deckelwand entfernt. Damit ist der Gehäuseinnenraum von oben zugänglich und kann die Medienleitung verlegt werden. Anschließend wird der Verbraucheranschluss hergestellt oder der Verbraucher angeschlossen. Dabei kann ein Träger, der den Verbraucheranschluss oder auch den Verbraucher selbst trägt, auf das Anschlussgehäuse gesetzt werden, sodass dieses als Sockel dient. Im Falle des herausnehmbaren Deckels kann der Träger bspw. anstelle des Deckels eingelegt werden, also bspw. auf einem Auflager aufsitzen, welches zuvor den Deckel getragen hat. Unabhängig von diesen Details wird der Träger bevorzugt zusätzlich befestigt, bspw. am Anschlussgehäuse verschraubt (im Allgemeinen wäre bspw. auch ein Klammern etc. denkbar). Ist die Medienleitung ein Stromkabel, kann das Anschlussgehäuse dann bspw. als Sockel einer Leuchte oder Ladestation dienen, insbesondere einer Ladestation für Elektrofahrzeuge. Diese Ladestation kann bspw. für mindestens 4 kW, 10 kW, 15 kW oder 20 kW ausgelegt sein, mögliche Obergrenzen können bspw. bei 40 kW, 30 kW bzw. 25 kW liegen. Aktuell gängig sind bspw. 11 kW und 22 kW.

Das Anschlussgehäuse kann insgesamt bspw. eine vertikale Höhe von mindestens 40 cm bzw. 50 cm haben, mit möglichen (davon unabhängigen) Obergrenzen bei z. B höchstens 80 cm bzw. 70 cm. Der von der Seitenwand des Anschlussgehäuses horizontal begrenzte Gehäuseinnenraum des Anschlussgehäuses kann bspw. ein Innenvolumen von mindestens 20 l, 30 l, 40 l bzw. 50 l haben, mit möglichen (davon unabhängigen) Obergrenzen bei bspw. höchstens 100 l, 90 l, 80 l, 70 l bzw. 60 l. Bevorzugt kann es zusätzlich eine Bodenwand geben, die den Gehäuseinnenraum nach vertikal unten begrenzt (was aber nicht zwingend notwendig ist). Hierbei beziehen sich "vertikal" und "horizontal" auf die Orientierung des Anschlussgehäuses in dem in den Boden eingebauten Zustand, also auf die Erdoberfläche als Bezugspunkt (vertikal meint senkrecht zu dieser, horizontal meint parallel dazu).

Die Erfindung betrifft auch ein Verfahren zum Herstellen einer vorliegend offenbarten Gebäudeinstallationsanordnung, bei welchem der Vergusskörper in das Wand- oder Bodenelement eingebaut, vorzugsweise eingegossen wird. Dies erfolgt, wie gesagt, bevorzugt im Zuge der Herstellung des Wand- oder Bodenelements. Dieses wird bevorzugt aus Beton gegossen, wobei der noch fließfähige Beton den Vergusskörper der Durchführung umschließt und dann erstarrt. Dieser Einbau erfolgt bevorzugt im Sinne einer Blindvorverlegung per se, also bei der Herstellung des Gebäudes noch unabhängig von den späteren Benutzungsabsichten. Soll dann später der Garten bzw. generell das Grundstück, also etwa auch die Einfahrt etc., mit einem Medium erschlossen werden, kann die entsprechende Medienleitung vergleichsweise einfach durch das Mantelrohr verlegt werden. Bevorzugt wird nach der Verlegung der Medienleitung gebäudeaußenseitig der Verbraucheranschluss hergestellt (wird die Leitung also zuvor ohne diesen verlegt, was das Hindurchfädeln vereinfachen kann).

Bevorzugt kann die Kombination mit dem gebäudeaußenseitig angeordneten Anschlussgehäuse sein, vgl. die vorstehende Diskussion, auch hinsichtlich der Verfahrensdetails (Verschlossensein und Öffnen für die Endmontage etc.).

Die Erfindung betrifft ferner die Verwendung einer Durchführung in einer vorliegend offenbarten Installationsanordnung oder einem entsprechenden Verfahren, vgl. die vorstehenden Angaben bzgl. möglicher Details der Durchführung.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Gebäudeinstallationsanordnung in einer teilweise geschnittenen, schematischen Seitenansicht;
- Figur 2: eine Übersichtsdarstellung zu der Gebäudeinstallationsanordnung gemäß Figur 1;
- Figur 3: eine weitere Gebäudeinstallationsanordnung in einer teilweise geschnittenen, schematischen Seitenansicht;
- Figur 4: eine Übersichtsdarstellung zu der Gebäudeinstallationsanordnung gemäß Figur 3;
- Figur 5: einen Vergusskörper einer Durchführung für eine Gebäudeinstallationsanordnung;
- Figur 6: eine geschnittene Schrägansicht des Vergusskörpers gemäß Figur 5, der nicht für sich, sondern nur im Rahmen der Gebäudeinstallationsanordnung durch die Ansprüche gedeckt ist;
- Figur 7a, b: ein Anschlussgehäuse, das nicht für sich, sondern nur im Rahmen der Gebäudeinstallationsanordnung durch die Ansprüche gedeckt ist, welches Anschlussgehäuse nach einer Endmontage als Sockel einen Verbraucher oder Verbraucheranschluss trägt.

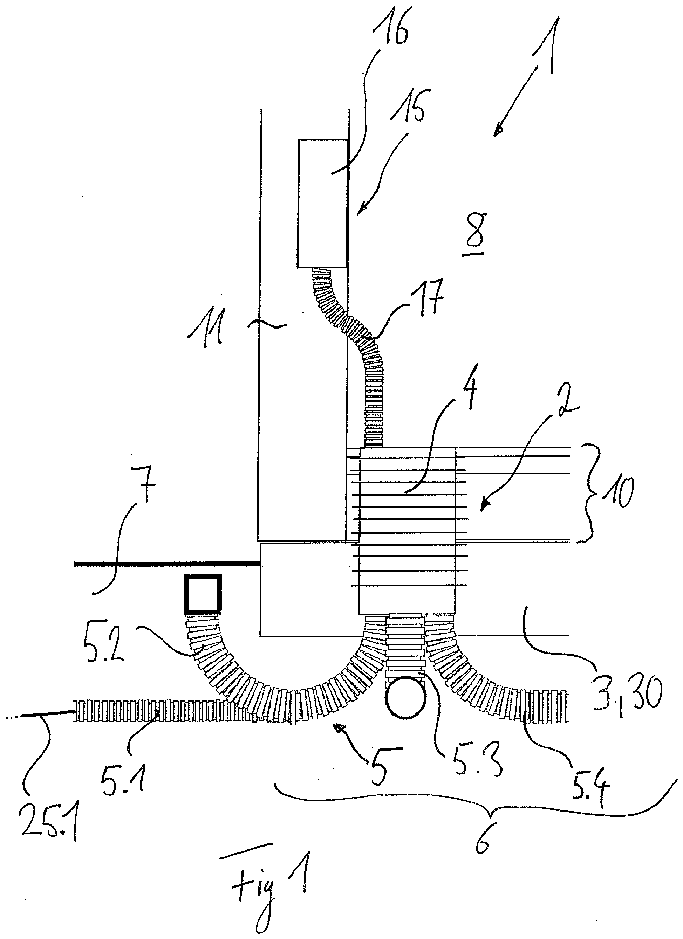

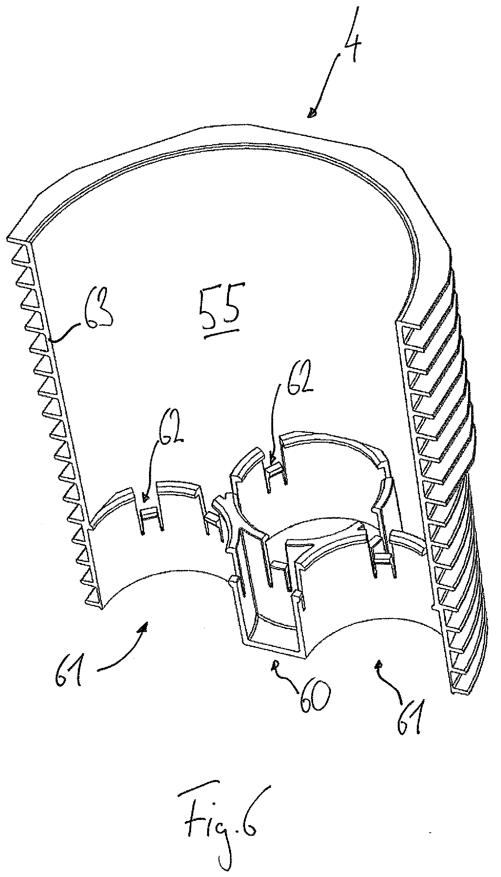

Figur 1 zeigt eine Gebäudeinstallationsanordnung 1, die eine Durchführung 2 aufweist, die in ein Wand- oder Bodenelement 3 eingebaut ist, vorliegend in eine Bodenplatte 30. Diese ist aus Beton gegossen, wobei die Durchführung 2 im Zuge dieser Herstellung baulich integriert, also eingegossen wurde. Die Durchführung 2 weist einen Vergusskörper 4 und mehrere Mantelrohre 5 auf, die jeweils von unten in den Vergusskörper 4 eingesteckt sind (vgl. Figur 6 im Detail). Im Einzelnen sind vorliegend vier Mantelrohre 5 von unten eingesetzt und gemeinsam mit dem Vergusskörper 4 baulich integriert, nämlich ein erstes Mantelrohr 5.1, ein zweites Mantelrohr 5.2, ein drittes Mantelrohr 5.3 und ein viertes Mantelrohr 5.4. Von dem Vergusskörper 4 weg, insbesondere außerhalb einer Gebäudegrundfläche 6, sind die Mantelrohre 5 jeweils im Boden 7 verlegt, bspw. in einer Tiefe zwischen 30-50 cm.

Im Gebäudeinneren 8 ist an der Wand 11 ein Versorgungsanschluss 15 vorgesehen, bspw. ein elektrischer Verteilerkasten 16. Dieser ist über ein Schutzrohr 17 mit dem Vergusskörper 4 verbunden, durch das Schutzrohr 17 kann eine erste Medienleitung 25.1, die im Boden 7 in dem Mantelrohr 5.1 geführt ist, entweder direkt bis zu dem Verteilerkasten 16 verlegt werden, oder es kann in dem Schutzrohr 17 ein Anschlusskabel verlegt und innerhalb des Vergusskörpers 4 mit der ersten Medienleitung 25.1 verbunden werden.

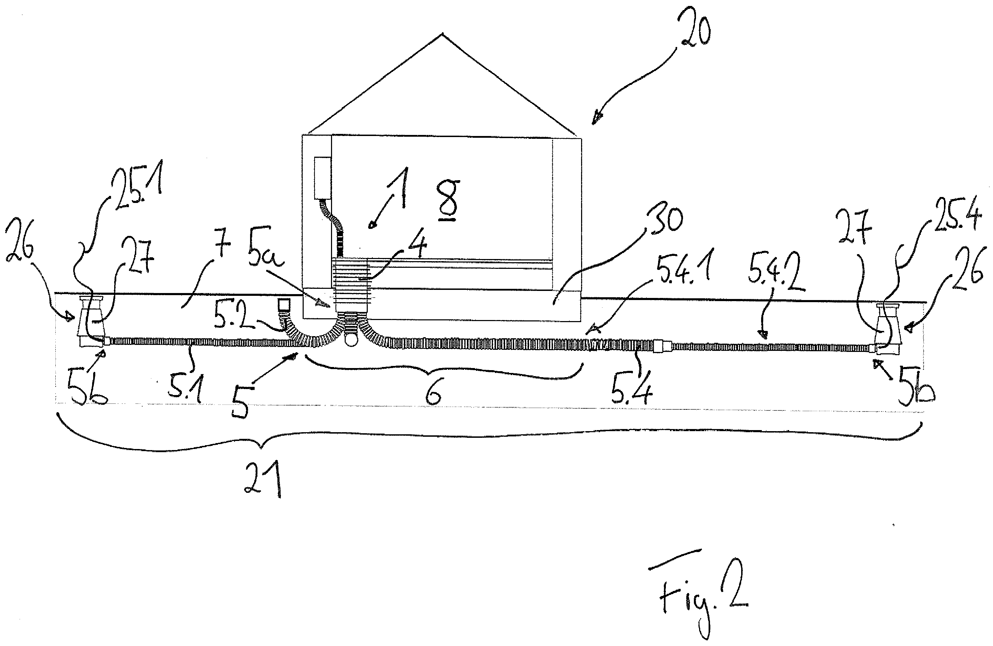

Figur 2 zeigt eine Übersichtsdarstellung mit der Gebäudeinstallationsanordnung 1 gemäß Figur 1. Zu erkennen ist das Gebäude 20, das kellerlos ausgeführt ist. In dessen Bodenplatte 30 ist der Vergusskörper 4 eingegossen, davon weg erstrecken sich die Mantelrohre 5 im Boden 7, vgl. auch die vorstehende Schilderung im Einzelnen. Generell bezeichnen im Rahmen dieser Offenbarung die gleichen Bezugszeichen gleiche Teile bzw. Teile mit vergleichbarer Funktion und wird insofern immer auch auf die Beschreibung zu den anderen Figuren verwiesen.

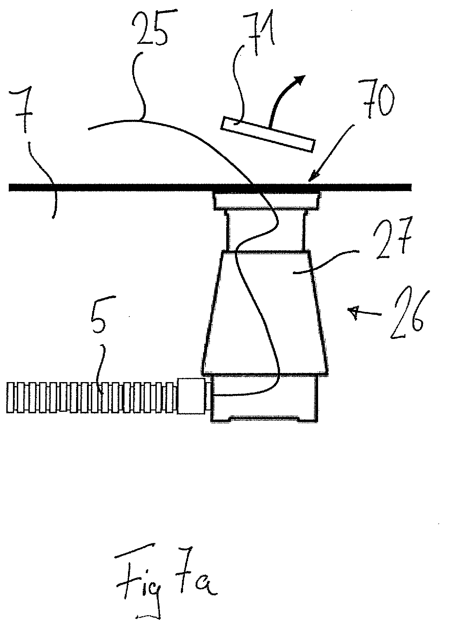

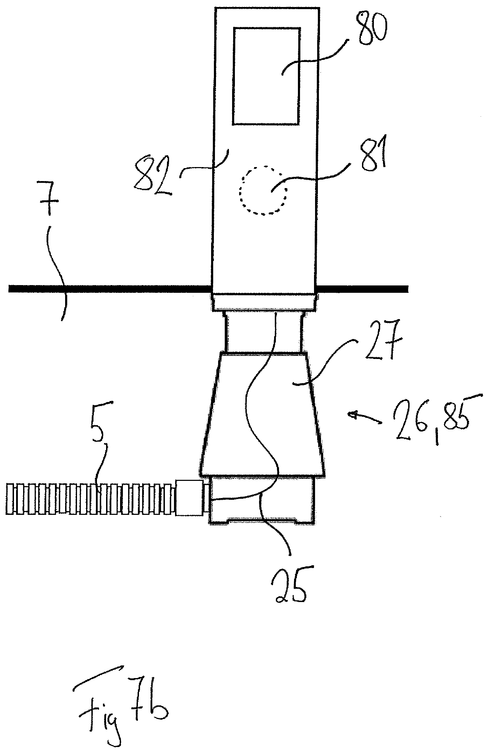

Die Mantelrohre 5 verlaufen im Boden 7, wobei sie über das Grundstück 21 verteilt an unterschiedlichen Stellen enden. Dabei sind die den Gebäude 20 distalen Enden 5b des ersten und vierten Mantelrohres 5.1,5.4 jeweils an ein Anschlussgehäuse 26 angeschlossen. Diese begrenzen jeweils einen Gehäuseinnenraum 27, in den das jeweilige Mantelrohr 5 mündet. Damit sind für das Verlegen der jeweiligen Medienleitung 25 Zugangspunkte geschaffen, ferner können die Anschlussgehäuse 26 bei der nachfolgenden Installation auch als Sockel dienen, vgl. Figur 7 im Detail.

In dem Beispiel gemäß Figur 2 ist das zweite Mantelrohr 5.2 nicht an ein Anschlussgehäuse 26 angeschlossen, es kann insofern blindvorverlegt und endseitig mit einem Stopfen verschlossen sein. Ist später ein weiterer Verbraucheranschluss auf dem Grundstück 21 erforderlich, kann das zweite Medienrohr 25.2 freigelegt und zu der entsprechenden Stelle hin verlängert werden. Auch wenn dies bspw. Bodenarbeiten im Garten erfordern kann, ist der Aufwand jedenfalls geringer als im Falle einer Neuverlegung vom Gebäudeinneren 8 aus. Aus Figur 2 ist ferner ersichtlich, dass die Mantelrohre 5 auch aus aneinandergesetzten Abschnitten aufgebaut sein können, bspw. das vierte Mantelrohr 5.4 aus einem ersten Mantelrohrabschnitt 5.4.1 und einem zweiten Mantelrohrabschnitt 5.4.2.

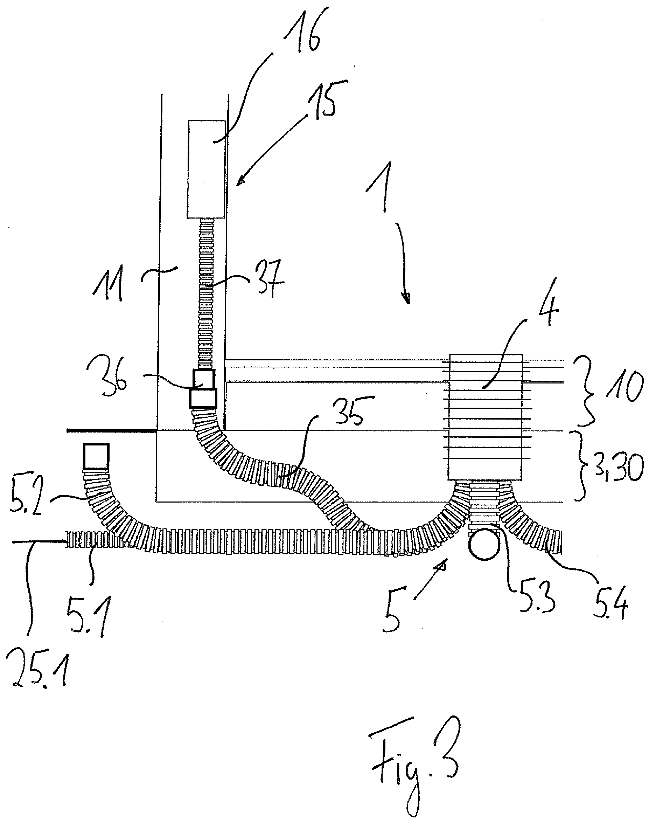

Figur 3 zeigt eine weitere Gebäudeinstallationsordnung 1, die in ihrem prinzipiellen Aufbau jener gemäß den Figuren 1 und 2 entspricht. Ein Unterschied liegt lediglich in der Anbindung des Vergusskörpers an den Versorgungsanschluss 15 , also an den Verteilerkasten 16. Hierfür ist bei der Variante gemäß Figur 3 ein weiteres Mantelrohr 35 vorgesehen, welches wie die anderen Mantelrohre 5 ebenfalls von unten in den Vergusskörper 4 eingesteckt ist (vgl. Figur 6 zur Illustration). Das weitere Mantelrohr 35 wird vor dem Gießen der Bodenplatte 30 jedoch nicht wie die anderen Mantelrohre 5 in deren Unterbau (Schotter bzw. Kies etc.) eingebettet, sodass es außerhalb der Gebäudegrundfläche 6 mündet, sondern innerhalb der Schalung nach oben verlegt. Es wird solchermaßen in der Schalung positioniert, dass es nach dem Gießen der Bodenplatte 30 dort mündet, wo die Wand 11 errichtet wird. Diese Wand 11 wird ebenfalls aus Beton gegossen, wobei das weitere Mantelrohr 35 zuvor über ein Kupplungsstück 36 mit einem Rohrabschnitt 37 nach oben verlängert wird. Dieser Rohrabschnitt 37 kann in der Schalung bspw. bis zu einem Aussparungskörper verlaufen, der eine Position für den Verteilerkasten freihält.

Alternativ kann die Wand 11 selbstverständlich auch aufgemauert und kann der Rohrabschnitt 37 dabei innerhalb an der Wand 11 verlegt werden. Weiterhin alternativ kann die Wand 11 ein Fertigteilelement sein, das auf die Bodenplatte 30 aufgesetzt wird, wobei der Rohrabschnitt 37 dann bspw. schon vorab in das Fertigteileelement integriert sein kann, etwa seitens des Fertigteilherstellers eingegossen werden kann. Unabhängig von diesen Details kann über das weitere Mantelrohr 35 und den Rohrabschnitt 37 der Vergusskörper 4 angeschlossen bzw. kann eine jeweilige Medienleitung 25.1 in den Vergusskörper 4 hinein und von dort aus im jeweiligen Mantelrohr 5.1 weiter in Richtung Verbraucher bzw. Verbraucheranschluss verlegt werden.

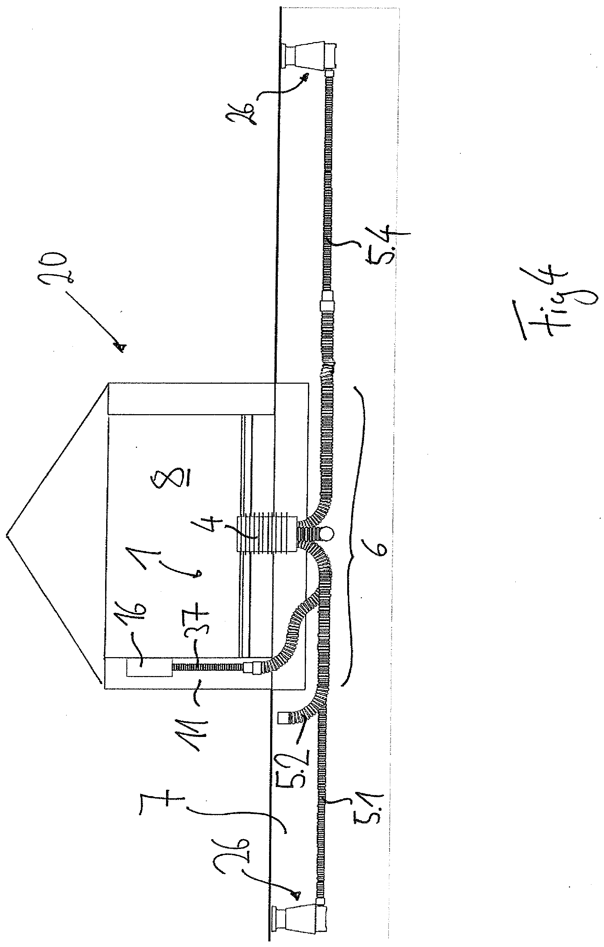

Figur 4 zeigt analog Figur 2 eine Übersichtsdarstellung, wobei die Installationsanordnung 1 analog Figur 3 über das in die Bodenplatte 30 eingegossene weitere Mantelrohr 35 an den Verteilerkasten 16 angeschlossen ist. Auch in diesem Beispiel sind das erste und das vierte Mantelrohr 5.1,5.4 jeweils an ein in den Boden 7 eingebautes Anschlussgehäuse 26 angeschlossen, alternativ könnte aber bspw. auch zusätzlich das zweite Mantelrohr 5.2 an ein Anschlussgehäuse angeschlossen sein oder könnten auch die anderen Mantelrohre analog dem zweiten vorerst nur ohne Anschlussgehäuse 26 bzw. Zugangspunkt blindvorverlegt sein.

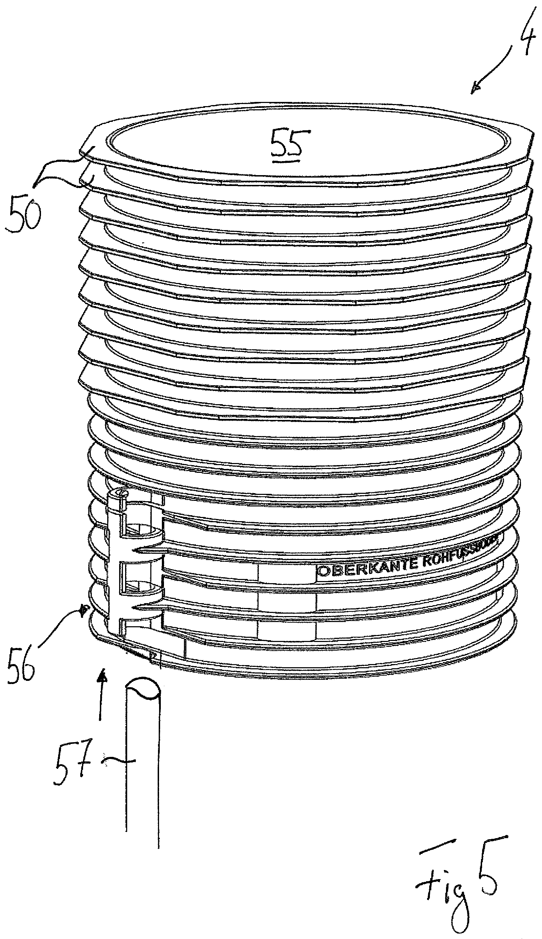

Figur 5 zeigt den Vergusskörper 5 in einer Schrägansicht, welche die zylindrische Grundform mit den außenseitigen Rippen 50 erkennen lässt. In der Bodenplatte hält der Vergusskörper 4 einen Hohlraum 55 frei, in den von unten die Mantelrohre 5 (hier nicht dargestellt) münden und der von oben zugänglich ist. Während des Eingießens in die Bodenplatte 30 und im Falle der Blindvorverlegung bspw. auch darüber hinaus kann der Vergusskörper 4 mit einem (nicht dargestellten) Deckel verschlossen sein, der den Hohlraum 55 nach oben abgedeckt. Außenseitig am Vergusskörper 4 ist eine Aufnahme 56 vorgesehen, in die ein Stab 57 eingeschoben werden kann. Damit lässt sich der Vergusskörper mit den daran angesetzten Mantelrohren 5 dann vor dem Gießen der Bodenplatte 30 innerhalb der Schalung positionieren bzw. ausrichten.

Figur 6 zeigt den Vergusskörper 4 in einem Schnitt, der die in der Bodenwand 60 des Vergusskörpers 4 ausgebildeten Aufnahmen 61 für die Mantelrohre 5 erkennen lässt. In den Aufnahmen 61 sind jeweils Formschlusselemente 62 angeformt, die in einem endseitigen Stutzen des jeweiligen Mantelrohres 5 eingreifen und dieses dann ausziehsicher halten. Der Vergusskörper 4 wird in dieser Form durch Spritzguss hergestellt, die Bodenwand 60 und eine Seitenwand 63 sind also aus demselben durchgehenden Kunststoffmaterial geformt.

Figur 7a zeigt ein in den Boden 7 eingebautes Anschlussgehäuse 26, an welches das im Boden 7 verlegte Mantelrohr 5 angeschlossen ist. Das Anschlussgehäuse 26 begrenzt einen Gehäuseinnenraum 27, in diesen mündet das Mantelrohr 5.

Das Anschlussgehäuse 26 ist von oben über eine Öffnung 70 zugänglich, wobei diese im Zuge der Vorverlegung mit einem Deckel 71 verschlossen ist.

In Figur 7a wurde der Deckel 71 abgenommen und wurde in dem Mantelrohr 5 eine Medienleitung 25 verlegt. Egal ob dies vom Anschlussgehäuse 26 oder vom entgegengesetzten Ende des Mantelrohres 5 aus erfolgt, steht mit dem Anschlussgehäuse 26 für das Hantieren an der Medienleitung 25 ein einfach öffenbarer Zugangspunkt zur Verfügung.

Figur 7b zeigt einen darauffolgenden Installationsschritt, wobei an die Medienleitung 25 ein Verbraucher 80 und/oder ein Verbraucheranschluss 81 angeschlossen ist. Bei letzterem kann es sich bspw. um einen Steckanschluss handeln, an dem bspw. im Falle eines Stromkabels ein elektrischer Verbraucher angeschlossen werden kann. Bei dem Verbraucher 80 kann es sich bspw. um eine Leuchte handeln, sowohl der Verbraucher 80 als auch der Verbraucheranschluss 81 sind vorliegend in eine Stele 82 integriert. Diese ist anstelle des Deckels 71 auf das Anschlussgehäuse 26 gesetzt, sodass Letzteres nicht nur als Zugangspunkt, sondern auch als Sockel 85 für den Verbraucher 80 bzw. Verbraucheranschluss 81 dient.

## Patentansprüche

1. Gebäudeinstallationsanordnung (1), mit
einer Durchführung (2), die einen Vergusskörper (4) und ein erstes in den Vergusskörper (4) mündendes Mantelrohr (5.1) aufweist,
wobei der Vergusskörper (4) in ein Wand- oder Bodenelement (3) eines Gebäudes (20) eingebaut ist und sich das erste Mantelrohr (5.1) von dem Vergusskörper (4) weg nach außerhalb des Gebäudes (20) erstreckt und dabei gebäudeaußenseitig zumindest abschnittsweise im Boden (7) verläuft,
wobei sich in dem ersten Mantelrohr (5.1) eine erste Medienleitung (25.1), bei welcher es sich um ein Stromkabel oder eine Wasserleitung handelt, nach außerhalb des Gebäudes (20) erstreckt,
und wobei an der ersten Medienleitung (25.1) außerhalb des Gebäudes (20) ein Verbraucher (80) oder Verbraucheranschluss (81) angeordnet ist,
und wobei die erste Medienleitung (25.1) an ihrem dem Verbraucher (80) oder Verbraucheranschluss (81) entgegengesetzten, gebäudeseitigen Ende mit dem verbraucherseitigen, nämlich gebäudeinnenseitigen Ende eines Medienhausanschlusses, über den das Medium in das Gebäude gelangt, verbunden ist,
wobei die Durchführung (2) ein zweites, ebenfalls in den Vergusskörper (4) mündendes Mantelrohr (5.2) aufweist, das sich ebenfalls von dem Vergusskörper (4) weg nach außerhalb des Gebäudes (20) erstreckt und dabei zumindest abschnittsweise im Boden (7) verläuft,
und wobei sich die Mantelrohre (5.1,5.2) in unterschiedlichen Richtungen von dem Gebäude (20) weg erstrecken.

2. Gebäudeinstallationsanordnung (1) nach Anspruch 1, bei welcher der Vergusskörper (4) in das Wand- oder Bodenelement (3) eingegossen ist.

3. Gebäudeinstallationsanordnug (1) nach Anspruch 1 oder 2, bei welcher sich das erste Mantelrohr (5.1) ausschließlich innerhalb eines dem Gebäude (20) zugehörigen Grundstücks (21) erstreckt.

4. Gebäudeinstallationsanordnung (1) nach einem der vorstehenden Ansprüche, bei welcher sich die Mantelrohre (5.1,5.2), in einer Aufsicht betrachtet, jeweils mindestens 2 m weit von dem Gebäude (20) weg erstrecken.

5. Gebäudeinstallationsanordnung (1) nach einem der vorstehenden Ansprüche, bei welcher der Vergusskörper (4) in eine Bodenplatte (30) des Gebäudes (20) eingebaut ist, welches bevorzugt kellerlos ausgeführt ist.

6. Gebäudeinstallationsanordnung (1) nach Anspruch 5, bei welcher ein weiteres Mantelrohr (35), das in den Vergusskörper (4) mündet, zumindest abschnittsweise innerhalb eines auf der Bodenplatte (30) errichteten Wandelements verläuft.

7. Gebäudeinstallationsanordnung (1) nach Anspruch 5 oder 6, bei welcher ein weiteres Mantelrohr (35), das in den Vergusskörper (4) mündet, die Bodenplatte (30) durchsetzt.

8. Gebäudeinstallationsanordnung (1) nach einem der vorstehenden Ansprüche, bei welcher das erste Mantelrohr (5.1) gebäudeaußenseitig an ein Anschlussgehäuse (26) angeschlossen ist, welches in den Boden (7) eingebaut ist und einen Gehäuseinnenraum (27) begrenzt, der über eine Öffnung (70) in dem Anschlussgehäuse (26) von oben zugänglich ist.

9. Gebäudeinstallationsanordnung (1) nach Anspruch 8, bei welcher das in den Boden (7) eingebaute Anschlussgehäuse (26) den Verbraucher (80) oder Verbraucheranschluss (81) als Sockel (85) trägt.

10. Verfahren zum Herstellen einer Gebäudeinstallationsanordnung (1) nach einem der vorstehenden Ansprüche, bei welchem Verfahren
der Vergusskörper (4) in das Wand- oder Bodenelement (3) des Gebäudes (20) eingebaut wird, und
in dem ersten Mantelrohr (5.1) die erste Medienleitung (25.1) verlegt wird, sodass sie sich nach außerhalb des Gebäudes (20) erstreckt.

11. Verfahren nach Anspruch 10 zum Herstellen der Gebäudeinstallationsanordnung (1) nach Anspruch 9, bei welchem die Öffnung (70) des Anschlussgehäuses (26) zunächst verschlossen ist und für eine Installation des Verbrauchers (80) oder Verbraucheranschlusses (81) geöffnet wird.

12. Verwendung einer Durchführung (2) in einer Gebäudeinstallationsanordnung (1) nach einem der Ansprüche 1 bis 9 oder in einem Verfahren nach Anspruch 10 oder 11.

## Claims

1. A building installation arrangement (1), comprising
a feedthrough (2) which has a casting body (4) and a first casing tube (5.1) which leads into the casting body (4),
wherein the casting body (4) is installed in a wall element or floor element (3) of a building (20) and the first casing tube (5.1) extends away from the casting body (4) to the outside of the building (20) and extends at least in a section in the floor (7) on the outside of the building,
wherein a first media line (25.1), which is a power cable or a water line, extends in the first casing tube (5.1) to the outside of the building (20),
and wherein a consumer (80) or consumer connection (81) is arranged on the first media line (25.1) outside the building (20),
and wherein the first media line (25.1) is connected at its end on the building side opposite the consumer (80) or consumer connection (81) to the end on the consumer side, namely on the inside of the building, of a media house connection via which the medium passes into the building,
wherein the feedthrough (2) has a second casing tube (5.2) which likewise leads into the casting body (4) and likewise extends away from the casting body (4) to the outside of the building (20) and extends at least in a section in the floor (7),
and wherein the casing tubes (5.1, 5.2) extend in different directions away from the building (20).

2. The building installation arrangement (1) according to claim 1, in which the casting body (4) is cast into the wall element or floor element (3).

3. The building installation arrangement (1) according to claim 1 or 2, in which the first casing tube (5.1) extends exclusively within a property (21) associated with the building (20).

4. The building installation arrangement (1) according to any one of the preceding claims, in which the casing tubes (5.1, 5.2), when viewed in a plan view, each extend at least 2 m away from the building (20).

5. The building installation arrangement (1) according to any one of the preceding claims, in which the potting body (4) is installed in a base plate (30) of the building (20), which is preferably designed without a cellar.

6. The building installation arrangement (1) according to claim 5, in which a further casing tube (35) which leads into the casting body (4) extends at least in a section within a wall element erected on the base plate (30).

7. The building installation arrangement (1) according to claim 5 or 6, in which a further casing tube (35) which leads into the casting body (4) passes through the base plate (30).

8. The building installation arrangement (1) according to any one of the preceding claims, in which the first casing tube (5.1) is connected on the outside of the building to a connection housing (26) which is installed in the floor (7) and delimits a housing interior (27) which is accessible from above via an opening (70) in the connection housing (26).

9. The building installation arrangement (1) according to claim 8, in which the connection housing (26) installed in the floor (7) carries the consumer (80) or consumer connection (81) as a base (85).

10. A method for manufacturing a building installation arrangement (1) according to any one of the preceding claims, in which method
the casting body (4) is installed in the wall element or floor element (3) of the building (20), and
the first media line (25.1) is laid in the first casing tube (5.1) so that it extends to the outside of the building (20).

11. The method according to claim 10 for manufacturing the building installation arrangement (1) according to claim 9, in which the opening (70) of the connection housing (26) is initially closed and is opened for an installation of the consumer (80) or consumer connection (81).

12. Use of a feedthrough (2) in a building installation arrangement (1) according to any one of claims 1 to 9 or in a method according to claim 10 or 11.

## Revendications

1. Agencement d'installation de bâtiment (1), comprenant
une traversée (2) qui présente un corps de scellement (4) et un premier tube d'enveloppe (5.1) débouchant dans le corps de scellement (4),
dans lequel le corps de scellement (4) est installé dans un élément de paroi ou de sol (3) d'un bâtiment (20) et le premier tube d'enveloppe (5.1) s'étend à partir du corps de scellement (4) vers l'extérieur du bâtiment (20) et s'étend ainsi du côté extérieur du bâtiment au moins en partie dans le sol (7),
dans lequel une première conduite de fluide (25.1), dans laquelle il s'agit d'un câble électrique ou d'une conduite d'eau, s'étend dans le premier tube d'enveloppe (5.1) vers l'extérieur du bâtiment (20),
et dans lequel un consommateur (80) ou un raccord de consommateur (81) est disposé sur la première conduite de fluide (25.1) à l'extérieur du bâtiment (20),
et dans lequel la première conduite de fluide (25.1) est connectée au niveau de son extrémité côté bâtiment opposée au consommateur (80) ou au raccord de consommateur (81) à l'extrémité côté consommateur, à savoir côté intérieur du bâtiment, d'un raccord de maison de fluide, par le biais duquel le fluide parvient dans le bâtiment,
dans lequel la traversée (2) présente un deuxième tube d'enveloppe (5.2) débouchant également dans le corps de scellement (4), qui s'étend également à partir du corps de scellement (4) vers l'extérieur du bâtiment (20) et s'étend ainsi au moins en partie dans le sol (7),
et dans lequel les tubes d'enveloppe (5.1, 5.2) s'étendent dans différentes directions à partir du bâtiment (20).

2. Agencement d'installation de bâtiment (1) selon la revendication 1, dans lequel le corps de scellement (4) est coulé dans l'élément de paroi ou de sol (3).

3. Agencement d'installation de bâtiment (1) selon la revendication 1 ou 2, dans lequel le premier tube d'enveloppe (5.1) s'étend exclusivement à l'intérieur d'un terrain (21) associé au bâtiment (20).

4. Agencement d'installation de bâtiment (1) selon l'une quelconque des revendications précédentes, dans lequel les tubes d'enveloppe (5.1, 5.2), vus en vue de dessus, s'étendent chacun à au moins 2 m du bâtiment (20).

5. Agencement d'installation de bâtiment (1) selon l'une quelconque des revendications précédentes, dans lequel le corps de scellement (4) est installé dans une plaque de fond (30) du bâtiment (20), laquelle est de préférence réalisée sans cave.

6. Agencement d'installation de bâtiment (1) selon la revendication 5, dans lequel un autre tube d'enveloppe (35), qui débouche dans le corps de scellement (4), s'étend au moins en partie à l'intérieur d'un élément de paroi érigé sur la plaque de fond (30).

7. Agencement d'installation de bâtiment (1) selon la revendication 5 ou 6, dans lequel un autre tube d'enveloppe (35), qui débouche dans le corps de scellement (4), traverse la plaque de fond (30).

8. Agencement d'installation de bâtiment (1) selon l'une quelconque des revendications précédentes, dans lequel le premier tube d'enveloppe (5.1) est raccordé du côté extérieur du bâtiment à un boîtier de raccordement (26), lequel est installé dans le sol (7) et délimite un espace intérieur de boîtier (27), lequel est accessible par le haut par le biais d'une ouverture (70) dans le boîtier de raccordement (26).

9. Agencement d'installation de bâtiment (1) selon la revendication 8, dans lequel le boîtier de raccordement (26) installé dans le sol (7) porte le consommateur (80) ou le raccord de consommateur (81) en tant que socle (85).

10. Procédé de fabrication d'un agencement d'installation de bâtiment (1) selon l'une quelconque des revendications précédentes, dans lequel procédé
le corps de scellement (4) est installé dans l'élément de paroi ou de sol (3) du bâtiment (20), et
la première conduite de fluide (25.1) est posée dans le premier tube d'enveloppe (5.1) de sorte qu'elle s'étende vers l'extérieur du bâtiment (20).

11. Procédé selon la revendication 10 pour la fabrication de l'agencement d'installation de bâtiment (1) selon la revendication 9, dans lequel l'ouverture (70) du boîtier de raccordement (26) est d'abord fermée et est ouverte pour une installation du consommateur (80) ou du raccord de consommateur (81).

12. Utilisation d'une traversée (2) dans un agencement d'installation de bâtiment (1) selon l'une quelconque des revendications 1 à 9 ou dans un procédé selon la revendication 10 ou 11.
